# EUROPEAN PATENT APPLICATION

(11) **EP 1 679 696 A1**
(43) Date of publication of application: **12.07.2006**
(21) Application number: 05290027.1
(22) Date of filing: 05.01.2005
(51) Int. Cl.: G10L 17/00

(54) **Speech verification for dispatching request**

(71) Applicant: ALCATEL, 75008 Paris (FR)
(72) Inventor: Weis, Bernd X., Dr., 70825 Korntal-Münchingen (DE)
(74) Representative: Rausch, Gabriele

(57) **Abstract**

A method for receiving a request, and dispatching the said request, where the said request is based on speech information (106), and where the dispatching is influenced by said speech information (106), and a control station (101) with a call centre (102) for receiving a request and an executive device (104) for dispatching the said request, where the said request is based on speech information (106), and where the dispatching is influenced by said speech information (106), are described. The said request is enriched with a result of a validation of the said speech information (106) and by completing the said dispatching depending on the validation result. The control station (101) comprises a truth validation component (110) for enriching the said request with result of a validation of the said speech information (106), wherein the said truth validation component (110) is placed ahead of the said executive device (104).

## Description

The present invention relates to a method for receiving a request, and dispatching the said request, where the said request is based on speech information, and where the dispatching is influenced by said speech information.

Moreover the present invention relates to a control station with a call centre for receiving a request and an executive device for dispatching the said request, where the said request is based on speech information, and where the dispatching is influenced by said speech information.

In transaction-controlled systems dispatch tasks very often are distinguished by a transaction number. This is the case for example in an emergency situation where a person, by calling an emergency number, requests help in particular from police, ambulance or fire-fighters. At an emergency dispatch centre the call is recorded, the necessary actions are initiated and the appropriate rescue team is dispatched. In the case of false alarms it is virtually impossible to cancel or change the actions once initiated. One reason for this is that it might be difficult to trace back the relevant transaction, "I just called and asked for help, but I don't need it anymore. Sorry about that". Secondly, it is important to ensure that the cancellation or change request is actually authorised.

A example being a person who believes that a burglar tries to enter a building. After calling the police for help by dialling the emergency number, this person eventually then finds out that there is no burglar in the building. This person might now want to cancel the emergency request.

It might also be that there is in fact a burglar in the building who overhears the emergency request of this person and tries to cancel the emergency request by himself. Such unauthorised cancellation of the emergency request must be prevented.

The US 5.701.400 teaches a method and an apparatus for applying if-then-else rules to data sets in a relational data base and generating from the results of application of said rules a database of diagnostics linked to said data sets to aid executive analysis. Those data sets comprise in particular financial data. The document gives no hint on how to receive and dispatch requests which are based on speech information.

The problem to be solved by the invention is to improve a method and a control station of the above-mentioned kind in a way that authorised requests, in particular cancellation or change requests for former emergency requests, are dispatched rapidly to reduce the number of false alarms. It must be ensured that unauthorised requests are denied.

The present invention solves this problem by enriching the said request with a result of a validation of the said speech information and by completing the said dispatching operation depending on the validation result.

According to the invention, a truth validation is linked to the receiving and dispatching of the request. By using this technology many false alarms can in time be aborted and, saving a substantial amount of money. Studies have shown that approx. 20% of the alarms in Germany are unnecessary. Reducing this number by only a small percentage will produce considerable savings. The speech includes the voice and characteristics of the voice, which are unique for a person. Such characteristics can be for example the manner of speaking, speech frequency, speech defects or the like.

To identify the former request, which belongs to the request and/or to ensure that a person who makes the request is identical to the person who made the former request, the request can be validated by comparing said speech information of the said request with a speech information of the former request.

Suitably, a speech parameter set from the said speech information and a speech parameter set (former speech parameter set) from the said former speech information can be extracted for said validation. Each person has an almost unique speech parameter set, making the result of the validation very accurate.

Preferably, the said speech parameter set / former speech parameter set can be tagged to the said request / said former request, so that the request always can be identified and/or verified.

To ensure that the request is not made by an unauthorised person, where only the person which made the former request is authorised to do the request, preferably the said request can be denied, if said validation produces a negative result, especially if said speech parameter set of the said request is not identical to the said former speech parameter set of the said former request.

To avoid privacy issues, suitably the said speech parameter set / said former speech parameter set can be deleted after completing the said request / said former request. Thus the speech parameter set is not linked to a caller's personal coordinates.

Preferably, the said speech information is validated, if the said request is a cancellation or change of the said former request. This reduces the number of false alarms drastically.

Suitably, the said speech information is validated in the context with emergency, especially in such cases when urgent action is required.

According to the invention a control station has a truth validation component for enriching the said request with a result of a validation of the said speech information, wherein the said truth validation component is placed ahead of the said executive device.

Suitably, the control station has a storage unit for a former request and/or a former speech parameter set and a comparator to identify and to compare two speech parameter sets.

Preferably, the Control Station has an extraction unit for extracting a speech parameter set / former speech parameter set from the said speech information/ the said former speech information.

A speech information/speech parameter - couple can preferably be realized with a tagging unit for tagging the said speech parameter set / former speech parameter set to the said request / said former request.

Most suitably, the said control station is part of an emergency dispatch centre, especially a police, a fire fighting and/or a rescue emergency dispatch centre.

Most suitably the control station is computerised. Technically, it is easily realised by means of microprocessor technology.

For a better understanding of the present invention and to understand how the same may be brought into effect, reference will now be made, by way of example only, to the accompanying drawings, in which
- figure 1: illustrates schematically a first computerised emergency dispatch centre for emergency requests;
- figure 2: illustrates schematically a second computerised emergency dispatch centre for cancellation or change requests of former emergency requests.

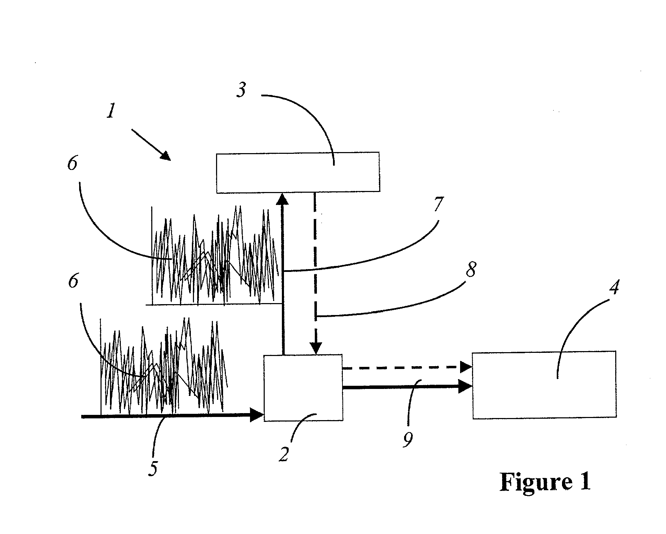

Figure 1 shows a first computerised emergency dispatch centre 1 (control station) of the police especially for receiving and dispatching emergency requests. It includes a call centre 2, an extraction unit 3 and an executive device 4.

The call centre 2 on the left side of figure 1 is connected with a speech input line 5 to a not shown voice network, from where an emergency request (first request) based on speech information 6, which is in figure 1 displayed as a voice spectrum, can be transmitted to the call centre 2.The speech includes the voice and characteristics of the voice, which are unique for a person. Such characteristics can be for example the manner of speaking, speech frequency, speech defects or the like.

The call centre 2 is connected via an extraction line 7 for the first speech information 6 with an extraction unit 3.

With the extraction unit 3 a first speech parameter set of the form {p₁, p₂, ..., p_{N}} can be extracted from the first speech information 6. The speech parameter set is unique to the speech of a calling person, so that it can be used for identification of that person.

A speech parameter set line 8 connects the extraction unit 3 with the call centre 2.

In the call centre 2, which here functions as a tagging unit, the first speech parameter set can be tagged to the first speech information 6 to create a first speech information / speech parameter set - couple.

Further, the call centre 2 is connected by a main line 9 for the first speech information / speech parameter set - couple with an executive device 4. The main line 9 is shown as a double line in figure 1. An electronic signal corresponding to the first speech information / speech parameter set - couple will be transmitted to the executive device 4. Alternatively, the first speech information / speech parameter set - couple can be transmitted directly. Also, the first speech information / speech parameter set - couple can be transmitted in combination with the corresponding electronic signal.

With the executive device 4, the required actions can be dispatched. For example the executive device 4 is in contact with a number of police patrols.

Additionally, the executive device 4 can initiate the storage of the first speech information / speech parameter set - couple in a storage unit, which is not shown in figure 1. The first speech information / speech parameter set - couple can later be used to identify and to verify a subsequent request, for example a request for cancelling the first emergency request. In the storage unit additional to said first speech information / speech parameter set - couple are also other first speech information / speech parameter set - couples of all pending emergency requests stored.

The method for receiving and dispatching a first emergency request can be described as follows:
When the emergency request, namely the first request, is received by the call centre 2, the first speech information 6 of the first request will be sent to the extraction unit 3.

The extraction unit 3 extracts the first speech parameter set from the first speech information 6 and sends this back to the call centre 2.

By means of the call centre 2, the first speech information set will be tagged to the first request, especially to the first speech information 6 to realize the first speech information / speech parameter set - couple.

Then, the electronic signal corresponding to the first speech information / speech parameter set - couple will be transmitted to the execution device 4 to dispatch the first request. For example, a police patrol will be sent for help. Besides the storage of the first speech information / speech parameter set - couple will be initiated.

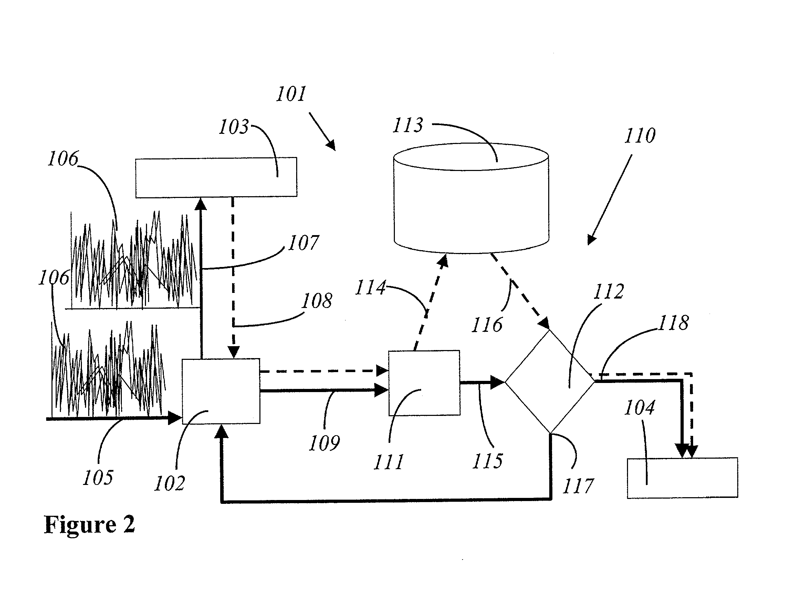

Figure 2 shows a second computerised emergency dispatch centre 101 of the police especially for receiving and dispatching a request which follows the first emergency request, which was received and dispatched as described in figur 1. The second computerised emergency dispatch centre 101 is similar to the first computerised emergency dispatch centre 1 shown in figure 1. The elements which are identical to those of the first computerised emergency dispatch centre 1 have the same reference marks plus 100, so that their description will refer to the explanation of the first computerised emergency dispatch centre 1. Unlike to the first computerised emergency dispatch centre 1, the second computerised emergency dispatch centre 101 has the function to receive and dispatch requests for cancelling the former, that means the first emergency request described in figure 1 (cancelling requests).

In principle the elements of the first computerised emergency dispatch centre 1 in figure 1 and the elements of the second computerised emergency dispatch centre 101 in figure 2 can be combined into one computerised emergency dispatch system, which is not shown in figure 1 nor 2. With this combined computerised emergency dispatch centre elements with identical functions are only needed once.

A storage unit 113 for the speech information / speech parameter set - couple is shown in figure 2.

Besides, the second emergency dispatch centre 101 includes a truth validation unit 110 with an input/distribution device 111 and a comparator 112. The function of the truth validation component 110 is to validate an incoming request. This means on the one hand to identify which of the stored speech parameter sets 6 of the pending emergency requests, which are stored in the storage unit 113 (storage unit 13 in figure 1), belongs to a speech parameter set of a speech information 106 of the incoming request. On the other hand, the truth validation component 110 has to verify whether the speech parameter set of the speech information 106 of the incoming request is identical to the stored speech parameter set of the first speech information 6 of the first request described in figure 1, in order to find out if the person making the incoming request is the same as the person making the former request.

A main line 109 connects the call centre 102 with the input/distribution device 111.

The input/distribution device 111 is on the one hand connected with the storage unit 113 via a storage input line 114.

On the other hand it is connected with the comparator 112 via a comparator input line 115.

A storage exit line 116 connects the storage unit 113 with the comparator 112.

The function of the comparator 112 is, above all, to compare a stored speech parameter set with a speech parameter set of the incoming request.

A No-exit 117 of the comparator 112 is connected with the call centre 102.

A Yes-exit 118 of the comparator 112 is connected with an executive device 104.

With the executive device 104, the incoming request can be dispatched.

The method for receiving and dispatching a second request especially for cancelling a corresponding pending emergency request will now be described:
When the second request is received by the call centre 102, a second speech information 106 of the second request will be send to the extraction unit 103.

The extraction unit 103 extracts the second speech parameter set from the second speech information 106 and sends this back to the call centre 102.

With the call centre 102, which here works as a tagging unit, the second speech information set will be tagged to the second request, especially to the second speech information 106 to realize the second speech information / speech parameter set - couple.

The second speech information / speech parameter set - couple then will be transmitted to the truth validation component 110 to identify a corresponding speech information / speech parameter set - couple of the pending emergency request in the storage unit 113 and to verify if the second speech parameter set is identical with the stored speech parameter set of the former emergency request.

If there is no corresponding speech information / speech parameter set - couple of a pending emergency request in the storage unit 113 or if the two speech parameter sets are not identical, the second request will be denied, and the call centre 102 will be informed. The dispatching of the first request will be continued.

If the two speech parameter sets are identical, the second request will be dispatched. This means, that the first request will be recognized as a false alarm. The actions initiated by the first request, namely the emergency request, will be stopped immediately. For example police patrols will be ordered back.

There is actually no need for linking the speech parameter sets to the caller's personal coordinates. The speech parameter sets need to be active only as long as the transaction is active, then they can be deleted. Hence, privacy issues can be avoided.

The elements of the computerised emergency dispatch centres 1; 101 can also be separately arranged and connected to each other. They can also be incorporated in one single housing.

The invention also can be used for a fire fighting, rescue and/or any other emergency dispatch centre.

The invention also can be used for an order processing system.

## Claims

1. A method for receiving a request, and dispatching the said request, where the said request is based on speech information, and where the dispatching is influenced by said speech information, **characterised by** enriching the said request with a result of a validation of the said speech information and by completing the said dispatching depending on the validation result.

2. A method as claimed in claim 1, **characterised in that** the request is validated by comparing said speech information of the said request with a speech information of a former request.

3. A method as claimed in claim 2, **characterised by** extracting a speech parameter set from the said speech information and a speech parameter set (former speech parameter set) from the said former speech information for said validation.

4. A method as claimed in claim 3, **characterised by** tagging the said speech parameter set / former speech parameter set to the said request / said former request.

5. A method as claimed in one of the preceding claims, **characterised by** denying the said request, if said validation produces a negative result, especially if said speech parameter set of the said request is not identical to the said former speech parameter set of the said former request.

6. A method as claimed in claim 3, **characterised by** deleting the said speech parameter set / said former speech parameter set after completing the said request / said former request.

7. A method as claimed in one of the preceding claims, **characterised in that** the said speech information is validated, if the said request is a cancellation or change of the said former request.

8. A method as claimed in one of the preceding claims, **characterised in that** the said speech information is validated in the context of emergency.

9. A control station with a call centre for receiving a request and an executive device for dispatching the said request, where the said request is based on speech information, and where the dispatching is influenced by said speech information, **characterised by** a truth validation component (110) for enriching the said request with result of a validation of the said speech information (106), wherein the said truth validation component (110) is placed ahead of the said executive device (104).

10. A control station as claimed in claim 9, **characterised by** a storage unit (113) and a comparator (112).

11. A control station as claimed in claim 9 or 10,
**characterised by** an extraction unit (3; 103) for extracting a speech parameter set / former speech parameter set from the said speech information (106)/ the said former speech information (6).

12. A control station as claimed in one of the claims 9 to 11, **characterised by** a tagging unit (2; 102) for tagging the said speech parameter set / former speech parameter set to the said request / said former request.

13. A control station as claimed in one of the claims 9 to 12, **characterised in that** the said control station is part of an emergency dispatch centre (1; 101), especially a police, a fire fighting and/or rescue emergency dispatch centre.

14. A control station as claimed in one of the claims 9 to 13, **characterised in that** it is computerised.
